# EUROPEAN PATENT APPLICATION

(11) **EP 4 835 526 A1**
(43) Date of publication of application: **04.11.2026**
(21) Application number: 24913024.6
(22) Date of filing: 26.12.2024
(51) Int. Cl.: G02B 6/036

(54) **OPTICAL FIBER**

(30) Priority: 28.12.2023 JP 2023222849
(71) Applicant: Sumitomo Electric Industries, Ltd., Osaka-shi, Osaka 541-0041 (JP)
(72) Inventor: OGAWA Satoshi, Osaka-shi, Osaka 541-0041 (JP); SAITO Takahiro, Osaka-shi, Osaka 541-0041 (JP); MORITA Keisei, Osaka-shi, Osaka 541-0041 (JP)
(74) Representative: TBK
(86) International application number: PCT/JP2024/046202
(87) International publication number: WO 2025/143138

(57) **Abstract**

A cladding (12) includes an inner cladding (121) that covers an outer circumference of a core (11), a trench (122) that covers an outer circumference of the inner cladding, and an outer cladding (123) that covers an outer circumference of the trench. The refractive index of the inner cladding is lower than the refractive index of the core. The refractive index of the trench is lower than the refractive index of the inner cladding. The refractive index of the outer cladding is higher than the refractive index of the trench and lower than the refractive index of the core. When a relative refractive index difference of the core with respect to the refractive index of pure silica is Δ1, a relative refractive index difference of the inner cladding with respect to the refractive index of pure silica is Δ2, a relative refractive index difference of the trench with respect to the refractive index of pure silica is Δ3, the radius of the outer circumference of the core is r1, the radius of the outer circumference of the inner cladding is r2, and the radius of the outer circumference of the trench is r3, r2/r1 is 2.2 to 3.6, r3-r2 is 3 µm to 10 µm, Δ1-Δ2 is 0.15% to 0.40%, and Δ3 is -0.70% to -0.10%.

## Description

### TECHNICAL FIELD

The present disclosure relates to optical fibers. This application claims priority based on Japanese Patent Application No. 2023-222849 filed on December 28, 2023, the entire contents of which are incorporated herein by reference.

### BACKGROUND ART

Patent literature 1 describes an optical fiber. The optical fiber includes a central core, an optical cladding, and a jacket. The central core includes a GeO₂. The relative refractive index difference of the central core based on the optical cladding is 0.2% to 0.32%. The relative refractive index difference of the jacket based on the optical cladding is 0.03% to 0.20%. The residual stress in the central core is the compressive stress. The absolute value of the residual stress in the central core is 30 MPa or less. A 2 m fiber cut-off wavelength is 1300 nm or more. The cut-off wavelength at the fiber length 100 m is 1500 nm or less. The transmission loss at the wavelength 1550 nm is 0.18 dB/km or less. In a cross section perpendicular to the fiber axis, the stress of a portion of 50% or more of the cross-sectional area of the jacket is the tensile stress.

Patent literature 2 describes an optical fiber. The optical fiber includes a core region, an optical cladding region, and a jacketing region. The jacketing region has a substantially uniform composition from the internal circumference to the outer circumference. A compressive strained layer in which the compressive stress remains is formed in the outermost periphery of the jacketing region. The compressive stress remaining in the compressive strained layer is 10 MPa or more. The thickness of the compressive strained layer is 30% or less of the outer diameter of the jacketing region.

### CITATION LIST

### PATENT LITERATURE

Patent literature 1: Japanese Unexamined Patent Application Publication No. 2013-122502
Patent literature 2: Japanese Unexamined Patent Application Publication No. 2011-102964

### SUMMARY OF INVENTION

An optical fiber according to an aspect of the present disclosure includes a glass fiber including a core and a cladding. The cladding includes an inner cladding surrounding an outer periphery of the core, a trench surrounding an outer periphery of the inner cladding, and an outer cladding surrounding an outer periphery of the trench. The inner cladding has a refractive index lower than a refractive index of the core. The trench has a refractive index lower than the refractive index of the inner cladding. The outer cladding has a refractive index higher than the refractive index of the trench and lower than the refractive index of the core. The core is doped with germanium. Where Δ1 is a relative refractive index difference of the core with respect to a refractive index of pure silica, Δ2 is a relative refractive index difference of the inner cladding with respect to the refractive index of pure silica, Δ3 is a relative refractive index difference of the trench with respect to the refractive index of pure silica, r1 is a radius of the outer periphery of the core, r2 is a radius of the outer periphery of the inner cladding, and r3 is a radius of the outer periphery of the trench, r2/r1 is 2.2 to 3.6, r3 - r2 is 3 µm to 10 µm, Δ1 - Δ2 is 0.15% to 0.40%, and Δ3 is -0.70% to -0.10%. A bending loss for light having a wavelength of 1625 nm is 1.0 dB or less per turn when the optical fiber is wound around a mandrel having a diameter of 15 mm, and a bending loss for light having a wavelength of 1625 nm is 0.1 dB or less per 10 turns when the optical fiber is wound around a mandrel having a diameter of 30 mm. The optical fiber has a cable cutoff wavelength of 1260 nm or less. The core has a residual stress that is a compressive stress. The glass fiber has a transmission loss of 0.19 dB/km or less for light having a wavelength of 1550 nm.

### BRIEF DESCRIPTION OF THE DRAWINGS

[FIG. 1] FIG. 1 is a diagram showing a cross section perpendicular to an axial direction of an optical fiber according to a first embodiment.
[FIG. 2] FIG. 2 is a diagram showing a refractive index distribution in a radial direction of a glass fiber.
[FIG. 3] FIG. 3 is a graph showing a relationship between a residual compressive stress in a core and a breakage frequency of an optical fiber.
[FIG. 4] FIG. 4 is a graph showing a relationship between a residual stress of a core and a yield of an optical fiber of a low-loss grade.
[FIG. 5] FIG. 5 is a graph showing a relationship between a radial position of an optical fiber based on the center of the optical fiber and a residual stress of the optical fiber.
[FIG. 6] FIG. 6 is a graph showing a relationship between the absolute value of the value obtained by differentiating residual stress of an outer cladding with respect to a radial position and a yield at which the dynamic fatigue coefficient of the outer cladding is equal to or higher than the international standard.
[FIG. 7] FIG. 7 is a graph showing a relationship between the dispersion (3σ) in an outer diameter variation of the glass fiber and the percentage of the optical fiber having a transmission loss of 0.32 dB/km or less at the wavelength 1310 nm.
[FIG. 8] FIG. 8 is a table showing specifications and characteristics of an optical fiber according to sample numbers 1 to 4 as an example and a comparative example.

### DETAILED DESCRIPTION

### [Problems to be Solved by Present Disclosure]

A single-mode optical fiber for communication is required to reduce the bending loss, that is, to satisfy a standard (for example, ITU-T G.657.A2) regarding the bending loss. In order to transmit an optical signal over a long distance, it is also required to reduce the transmission loss.

### [Advantageous Effects of Present Disclosure]

According to the present disclosure, an optical fiber with reduced bending loss and transmission loss can be provided.

### [Description of Embodiments of Present Disclosure]

First, the contents of the embodiments of the present disclosure will be listed and described.
[1] An optical fiber according to an aspect of the present disclosure includes a glass fiber including a core and a cladding. The cladding includes an inner cladding surrounding an outer periphery of the core, a trench surrounding an outer periphery of the inner cladding, and an outer cladding surrounding an outer periphery of the trench. The inner cladding has a refractive index lower than a refractive index of the core. The trench has a refractive index lower than the refractive index of the inner cladding. The outer cladding has a refractive index higher than the refractive index of the trench and lower than the refractive index of the core. The core is doped with germanium. Where Δ1 is a relative refractive index difference of the core with respect to a refractive index of pure silica, Δ2 is a relative refractive index difference of the inner cladding with respect to the refractive index of pure silica, Δ3 is a relative refractive index difference of the trench with respect to the refractive index of pure silica, r1 is a radius of the outer periphery of the core, r2 is a radius of the outer periphery of the inner cladding, and r3 is a radius of the outer periphery of the trench, r2/r1 is 2.2 to 3.6, r3 - r2 is 3 µm to 10 µm, Δ1 - Δ2 is 0.15% to 0.40%, and Δ3 is -0.70% to -0.10%. A bending loss for light having a wavelength of 1625 nm is 1.0 dB or less per turn when the optical fiber is wound around a mandrel having a diameter of 15 mm, and a bending loss for light having a wavelength of 1625 nm is 0.1 dB or less per 10 turns when the optical fiber is wound around a mandrel having a diameter of 30 mm. The optical fiber has a cable cutoff wavelength of 1260 nm or less. The core has a residual stress that is a compressive stress. The glass fiber has a transmission loss of 0.19 dB/km or less for light having a wavelength of 1550 nm.
   The optical fiber having these parameters have reduced the bending loss and the transmission loss.
[2] In the optical fiber according to the above [1], a bending loss for light having a wavelength of 1625 nm may be 1.0 × 10⁻⁴ dB or less per turn when the optical fiber is wound around a mandrel having a diameter of 100 mm.
[3] In the optical fiber according to the above [1] or [2], |dQ(r)/dr| in a section of 10% to 90% of a thickness of the outer cladding may be 2.0 [MPa/µm] or less, where Q(r) [MPa] is a residual stress in the outer cladding at a position of r [µm] from a center of the optical fiber.
[4] In the optical fiber according to any one of the above [1] to [3], the core may be further doped with fluorine.
[5] In the optical fiber according to the above [4], a fluorine concentration contained in the core may be 200 ppm or more.
[6] In the optical fiber according to any one of the above [1] to [5], an average value of the residual compressive stresses in the core in a radial direction of the core may be 100 MPa or less.
[7] In the optical fiber of any one of the above [1] to [6], the glass fiber may have a transmission loss of 0.32 dB/km or less for light having a wavelength of 1310 nm. The glass fiber may have a transmission loss of 0.18 dB/km or less for light having a wavelength of 1550 nm.

### [Details of Embodiments of Present Disclosure]

A specific example of the optical fiber according to the embodiment will be described with reference to the drawings as necessary. The present disclosure is not limited to these examples, but is defined by the scope of the claims, and is intended to include all modifications within the scope and meaning equivalent to the scope of the claims. In the following description, the same elements are denoted by the same reference numerals in the description of the drawings, and redundant description will be omitted. In the following description, the "outer diameter" of a certain element refers to the average value of the outer diameter of the element at each position in the axial direction of the optical fiber. Similarly, the "thickness" of a certain element refers to an average value of the thickness of the element at each position in the axial direction of the optical fiber.

### (First Embodiment)

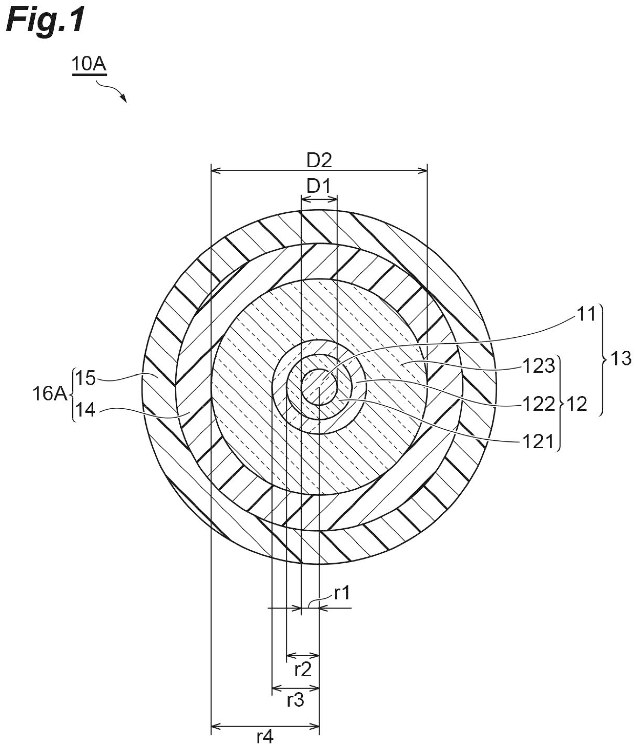

FIG. 1 is a diagram showing a cross section perpendicular to an axial direction of an optical fiber 10A according to a first embodiment. The optical fiber 10A is a so-called optical fiber that conforms to at least one of the ITU-T G.652 standard and the ITU-T G.657 standard. The expression "conform to the ITU-T G.652 standard" means that the optical fiber conforms to at least one of G.652.A, G.652.B, G.652.C, and G.652.D. The expression "conform to the ITU-T G.657 standard" means that the optical fiber conforms to at least one of G.657.A and G.657.B. The optical fiber 10A includes a glass fiber 13 including a core 11 and a cladding 12, and a coating resin layer 16A including a primary resin layer 14 and a secondary resin layer 15 provided on an outer periphery of the glass fiber 13.

The cladding 12 surrounds the core 11. The core 11 and the cladding 12 mainly contain glass such as quartz glass. The core 11 is made of, for example, a material obtained by doping germanium (Ge) to pure quartz glass. Here, the pure quartz glass does not substantially contain impurities. The transmission loss of light of the optical fiber 10A increases by doping germanium to the material constituting the core 11.

An outer diameter D2 of the glass fiber 13, that is, the outer diameter of the cladding 12 is 125 µm ± 0.5 µm, that is, 124.5 µm to 125.5 µm, and a diameter D1 of the core 11 is 6.0 µm to 12.0 µm. By having the outer diameter D2 of the glass fiber 13 that is the same as that of conventional glass fibers, it is possible to use standard peripheral fixtures, such as connectors and fusion splicers, making it easy to replace existing optical fibers. For example, it becomes easier to apply the optical fiber 10A to microduct cables, ultra-multicore cables for data centers, and various other types of cables.

The cladding 12 includes an inner cladding 121 surrounding an outer periphery of the core 11 and contacting an outer peripheral surface of the core 11, a trench 122 surrounding an outer periphery of the inner cladding 121 and contacting an outer peripheral surface of the inner cladding 121, and an outer cladding 123 surrounding an outer periphery of the trench 122 and contacting an outer peripheral surface of the trench 122. The inner cladding 121 can be made of quartz glass doped with chlorine (Cl). The average chlorine mass concentration of the inner cladding 121 is, for example, 500 ppm to 5000 ppm, and more preferably, for example, 500 ppm to 3000 ppm. The trench 122 can be made of quartz glass doped with fluorine. The outer cladding 123 can be made of pure quartz glass. The average chlorine mass concentration of the outer cladding 123 is, for example, substantially zero. Here, substantially zero means that the concentration is 50 ppm or less. The average OH mass concentration of the outer cladding 123 is, for example, 5 ppm to 500 ppm, and more preferably, for example, 5 ppm to 200 ppm. Such average chlorine mass concentration and average OH mass concentration of the outer cladding 123 are achieved by sintering the outer cladding 123 in a vacuum atmosphere, for example.

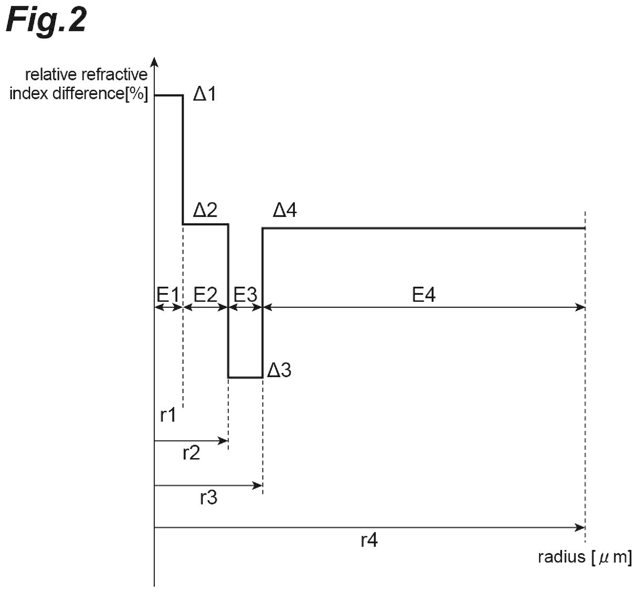

FIG. 2 is a diagram showing a refractive index distribution in a radial direction of the glass fiber 13. In FIG. 2, a range E1 corresponds to the core 11, a range E2 corresponds to the inner cladding 121, a range E3 corresponds to the trench 122, and range E4 corresponds to the outer cladding 123. The vertical axis represents the relative refractive index difference, and the horizontal axis represents the radial position. As shown in FIG. 2, in the glass fiber 13, the relative refractive index differences of the core 11, the inner cladding 121, the trench 122, and the outer cladding 123 with respect to the refractive index of pure silica are Δ1, Δ2, Δ3, and Δ4, respectively. Δ1, Δ2, Δ3, and Δ4 are numerical values (unit: %) represented by the following mathematical formulas. $Δ 1 = 100 ⋅ \left({n}_{1 ave}-{n}_{0}\right) / {n}_{1 ave}$ $Δ 2 = 100 ⋅ \left({n}_{2 ave}-{n}_{0}\right) / {n}_{2 ave}$ $Δ 3 = 100 ⋅ \left({n}_{3 ave}-{n}_{0}\right) / {n}_{3 ave}$ $Δ 4 = 100 ⋅ \left({n}_{4 ave}-{n}_{0}\right) / {n}_{4 ave}$ Note that, n₀ is the refractive index of pure silica, n₁ₐᵥₑ is the average value of the refractive index of the core 11, n₂ₐᵥₑ is the average value of the refractive index of inner cladding 121, n₃ₐᵥₑ is the average value of the refractive index of the trench 122, and n₄ₐᵥₑ is the average value of the refractive index of outer cladding 123. At this time, the relative refractive index difference Δ2 of the inner cladding 121 is smaller than a relative refractive index difference Δ1 of the core 11. In other words, the refractive index of the inner cladding 121 is smaller than the refractive index of the core 11. The relative refractive index difference Δ3 of the trench 122 is negative and is smaller than the relative refractive index difference Δ2 of the inner cladding 121. In other words, the refractive index of the trench 122 is smaller than the refractive index of the inner cladding 121. The sign of the relative refractive index difference Δ1 of the core 11 is positive. The sign of the relative refractive index difference Δ3 of the trench 122 is negative, it means that the refractive index of the trench 122 is smaller than the refractive index of the pure silica. The refractive index of the outer cladding 123 is larger than the refractive index of the trench 122 and smaller than the refractive index of the core 11.

The value (Δ1 - Δ2) obtained by subtracting the relative refractive index difference Δ2 of the inner cladding 121 from the relative refractive index difference Δ1 of the core 11 is 0.15% to 0.40%. In one example, the value (Δ1 - Δ2) is 0.34%. Such a relatively small value (Δ1 - Δ2) allows for an increase in the mode field diameter of the optical fiber 10A. The absolute value |Δ2| of the relative refractive index difference Δ2 of the inner cladding 121 is 0.10% or less. The relative refractive index difference Δ3 of the trench 122 is -0.70% to -0.10%. When the relative refractive index difference Δ3 of the trench 122 is within such a range, it is not necessary to extremely increase the amount of fluorine doped in the step of sintering the glass. The relative refractive index difference Δ3 of the trench 122 may be smaller than -0.25%. In one example, the relative refractive index difference Δ1 of the core 11 is 0.34%, the relative refractive index difference Δ2 of the inner cladding 121 is 0.00%, the relative refractive index difference Δ3 of the trench 122 is -0.30%, and the relative refractive index difference Δ4 of the outer cladding 123 is 0.00%.

As shown in FIG. 1 and FIG. 2, the radius of the outer periphery of the core 11 is r1, the radius of the outer periphery of the inner cladding 121 is r2, and the radius of the outer periphery of the trench 122 is r3. At this time, a value (r2/r1) obtained by dividing the radius r2 of the inner cladding 121 by the radius r1 of the core 11 is 2.2 to 3.6. A value (r3 - r2) obtained by subtracting the radius r2 of the inner cladding 121 from the radius r3 of the trench 122 is 3 µm to 10 µm. In one example, the value (r3 - r2) is 6.0 µm. The value (r3 - r2) may be larger than 4.5 µm. The outer diameter of the outer cladding 123, i.e., the outer diameter of the glass fiber 13, is in the range of 125 µm ± 0.5 µm. In one embodiment, the radius r1 of the core 11 is 3.8 µm, the radius r2 of the inner cladding 121 is 10.65 µm, and the radius r3 of the trench 122 is 16.65 µm.

The material constituting the core 11 also contains doped fluorine (F). When germanium and fluorine are co-doped in the material constituting the core 11, the residual stress in the core 11 becomes the compressive stress. In the case that the value of the residual stress is negative, the residual stress is the compressive stress. The fluorine concentration contained in the core 11 is, for example, 200 ppm or more. This makes the residual stress in the core 11 likely to be the compressive stress. The fluorine concentration of 200 ppm corresponds to -0.007% in terms of relative refractive index difference. The residual compressive stress in the core 11 is, for example, larger than 10 MPa, larger than 30 MPa, or 40 MPa or more. The residual compressive stress in the core 11 is, for example, 100 MPa or less, or 80 MPa or less. The residual compressive stress in the core 11 is an average value of the absolute values of the residual stress of the core 11 in the radial direction.

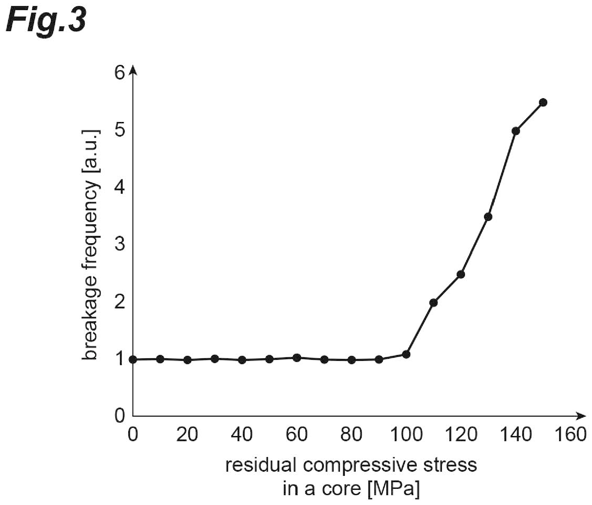

FIG. 3 is a graph showing an example of the relationship between the residual compressive stress in the core 11 and the breakage frequency of the optical fiber 10A. In FIG. 3, the breakage frequency of the optical fiber 10A is expressed as a relative value, with the breakage frequency of the optical fiber 10A when the residual compressive stress in the core 11 is 0 MPa set to one. In this example, the relative refractive index difference Δ1 of the core 11 is 0.35%, the relative refractive index difference Δ2 of the inner cladding 121 is 0.02%, and the relative refractive index difference Δ3 of the trench 122 is -0.30%. The radius r1 of the core 11 is 4.0 µm, the radius r2 of the inner cladding 121 is 8.8 µm, and the radius r3 of the trench 122 is 14.8 µm. As is clear from FIG. 3, when the residual compressive stress in the core 11 is 100 MPa or less, the breakage frequency of the optical fiber 10A can be significantly reduced compared to when the residual compressive stress in the core 11 is larger than 100 MPa. When the residual compressive stress in the core 11 is 80 MPa or less, the breakage frequency of the optical fiber 10A can be further reduced.

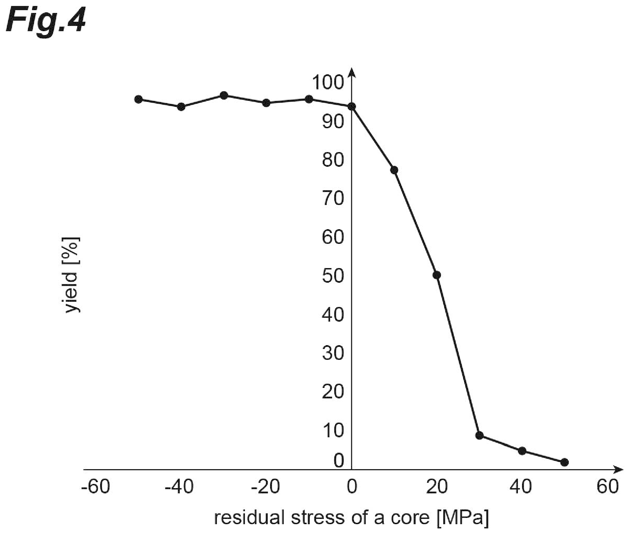

FIG. 4 is a graph showing an example of the relationship between the residual stress of the core 11 and the yield of the optical fiber 10A of the low-loss grade. The residual stress of the core 11 is an average value of the residual stress of the core 11 in the radial direction. The low-loss grade specifically refers to the condition where the transmission loss of the optical fiber 10A for light at a wavelength of 1310 nm is 0.32 dB/km or less. In FIG. 4, in the case that the value of the residual stress is negative, the residual stress is the compressive stress. In the case that the value of the residual stress is positive, the residual stress is the tensile stress. In this example, the same optical fiber as in the example of FIG. 3 was used. As in the example of FIG. 3, the relative refractive index difference Δ1 of the core 11 is 0.35%, the relative refractive index difference Δ2 of the inner cladding 121 is 0.02%, and the relative refractive index difference Δ3 of the trench 122 is -0.30%. The radius r1 of the core 11 is 4.0 µm, the radius r2 of the inner cladding 121 is 8.8 µm, and the radius r3 of the trench 122 is 14.8 µm. As is clear from FIG. 4, the yield of the optical fiber 10A of the low-loss grade when the residual stress in the core 11 is the compressive stress is significantly higher than the yield of the optical fiber 10A of the low-loss grade when the residual stress in the core 11 is the tensile stress.

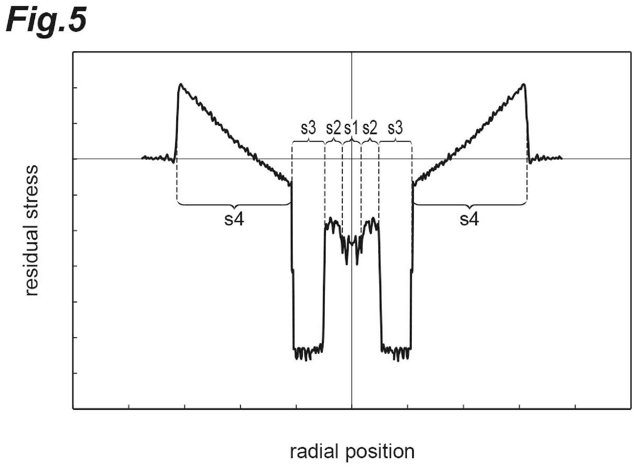

FIG. 5 is the graph showing the example of the relationship between a radial position r based on the center of the optical fiber 10A and the residual stress of the optical fiber 10A. In FIG. 5, a section s1 corresponds to the core 11, a section s2 corresponds to the inner cladding 121, a section s3 corresponds to the trench 122, and section s4 corresponds to the outer cladding 123. In this example, the same optical fiber as in the example of FIG. 3 was used. As in the example of FIG. 3, the relative refractive index difference Δ1 of the core 11 is 0.35%, the relative refractive index difference Δ2 of the inner cladding 121 is 0.02%, and the relative refractive index difference Δ3 of the trench 122 is -0.30%. The radius r1 of the core 11 is 4.0 µm, the radius r2 of the inner cladding 121 is 8.8 µm, and the radius r3 of the trench 122 is 14.8 µm. Here, the residual stress of the outer cladding 123 at the radial position r [µm] is denoted by Q(r) [MPa]. In a section from 10% to 90% of the thickness of the outer cladding 123 (specifically, in a section between a radial position corresponding to 10% of the thickness of the outer cladding 123 and a radial position corresponding to 90% of the thickness of the outer cladding 123 when the position of the interface between the outer cladding 123 and the trench 122 is a radial position corresponding to 0% of the thickness of the outer cladding 123), the absolute value of a value (dQ(r)/dr) obtained by differentiating the residual stress Q(r) with respect to the radial position r satisfies, for example, the following condition.$\left|dQ\left(r\right)/dr\right| \leq 2.0 \left[MPa/μm\right]$ The |dQ(r)/dr| referred to herein is calculated based on a moving average of the residual stress Q(r) at a plurality of points set at intervals of 0.15 µm in the radial direction (or a predetermined number of points set at equal intervals, for example, 25 points). The residual stress Q(r) is measured using, for example, IFA-100 (manufactured by Interfiber Analysis, LLC).

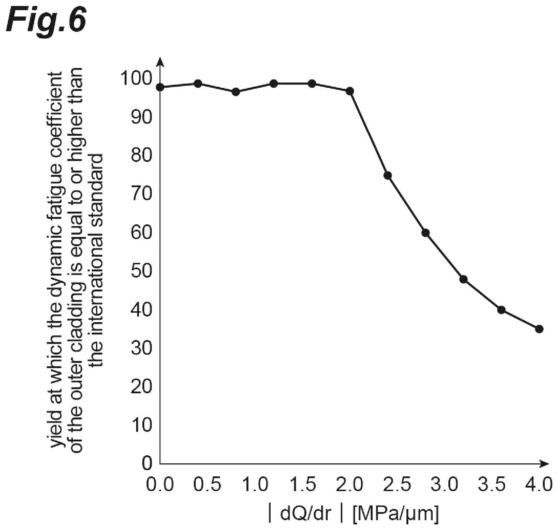

FIG. 6 is a graph showing the relationship between |dQ(r)/dr| and the yield at which the dynamic fatigue coefficient of the optical fiber 10A is 18 or more, which is the international standard. In FIG. 6, the yield at which the dynamic fatigue coefficient of the optical fiber 10A is 18 or more is less than 90% when |dQ(r)/dr| is larger than 2.0 MPa, and is significantly reduced as |dQ(r)/dr| increases. As is clear from FIG. 6, when |dQ(r)/dr| is 2.0 MPa or less, the yield at which the dynamic fatigue coefficient of the optical fiber 10A is 18 or more is maintained at a high level of 95% or more. That is, when |dQ(r)/dr| is 2.0 [MPa/µm] or less, the dynamic fatigue coefficient of the optical fiber 10A can sufficiently satisfy the international standard.

In the optical fiber 10A, the mode field diameter for the light in the wavelength 1310 nm is 9.2 µm ± 0.4 µm, that is, 8.8 µm to 9.6 µm. The mode field diameter is defined according to Petermann-II. The bending loss for light having a wavelength 1625 nm is 1.0 dB or less per turn when the optical fiber 10A is wound around the mandrel having a diameter of 15 mm. The bending loss for light having a wavelength 1625 nm is 0.1 dB or less per 10 turns when the optical fiber 10A is wound around the mandrel having a diameter of 30 mm. The bending loss for light having a wavelength 1625 nm is 1.0 × 10⁻⁴ dB or less per turn when the optical fiber 10A is wound around the mandrel having a diameter of 100 mm. By setting the value (r2/r1) obtained by dividing the radius r2 of the inner cladding 121 by the radius r1 of the core 11 to 3.6 or less, such bending loss characteristics can be achieved. As described above, the optical fiber 10A satisfies the level of the bending loss regulated in G.657.A2 while expanding the mode field diameter more than usual (optical fiber having only one step of refractive index distribution for each of the core and cladding) with 9.2 µm as the center. Thus, the optical fiber 10A sufficiently functions as a single-mode fiber. Since the bending loss when the optical fiber is wound around the 100 mm of the diameter is too small to be measured, the bending loss is measured at several bending diameters within the range from the 20 mm to the 60 mm, and the bending loss is calculated by extrapolation based on the bending diameter dependency of the bending loss.

The zero-dispersion wavelength of the optical fiber 10A is 1300 nm to 1324 nm. That is, the zero-dispersion wavelength of the optical fiber 10A conforms to the regulation of G.657.A2. By setting the value (r2/r1) obtained by dividing the radius r2 of the inner cladding 121 by the radius r1 of the core 11 to 2.2 or more, such zero-dispersion wavelength can be achieved. The chromatic dispersion of the optical fiber 10A for light of wavelength 1550 nm is 18.6 ps/(nm·km) or less. The zero-dispersion slope of the optical fiber 10A is 0.092 ps/(nm²·km) or less. By having the chromatic dispersion and the zero-dispersion slope within these ranges, a bending-resistant optical fiber that conforms to the G.657.A2 standard can be obtained.

The cable cutoff wavelength of the optical fiber 10A is 1260 nm or less. That is, the cable cutoff wavelength of the optical fiber 10A conforms to the regulation of G.657.A2.

The transmission loss of the optical fiber 10A for light having the wavelength of 1310 nm is 0.32 dB/km or less. In other words, the average OH mass concentrations in the core 11 and the cladding 12 are small to such an extent that the transmission loss for light having the wavelength of 1310 nm is 0.32 dB/km or less. By having the transmission loss is within this range, it becomes possible to expand the wavelength range available for information transmission in optical communication systems, as well as to provide the low-loss grade optical fiber 10A.

The transmission loss of the optical fiber 10A for light having the wavelength of 1550 nm is 0.19 dB/km or less, or 0.18 dB/km or less. In other words, the average OH mass concentrations in the core 11 and the cladding 12 are small to the extent that the transmission loss for the light having the wavelength of 1550 nm is 0.19 dB/km or less, or is small to the extent that the transmission loss is 0.18 dB/km or less. By having the transmission loss is within this range, it is possible to provide the low-loss grade optical fiber 10A.

When the standard deviation of the variation of the outer diameter of the glass fiber 13 in the axial direction is denoted as σ, 3σ is, for example, 0.1 µm to 0.5 µm. Here, the standard deviations σ indicate variations in the fluctuation of the length direction (that is, outer diameter variation) of the measurement values when measurement is performed at constant intervals (for example, 1 m intervals) in the longitudinal direction. The value 3σ is more preferably within a range of 0.2 µm to 0.5 µm. The outer diameter variation needs to be less than or equal to a predetermined value to satisfy international standards for glass diameter.

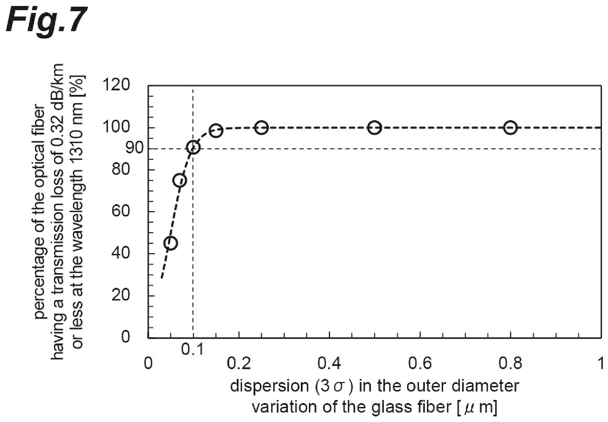

FIG. 7 is a graph showing the relationship between the dispersion (3σ) in the outer diameter variation of the glass fiber 13 and the percentage of the optical fibers having the transmission loss of 0.32 dB/km or less at the wavelength 1310 nm. As is clear from FIG. 7, when the dispersion (3σ) in the outer diameter variation is 0.1 µm or more, the percentage of optical fibers with the transmission loss of 0.32 dB/km or less exceeds 90%, indicating that the transmission loss can be sufficiently minimized. The dispersion in the outer diameter variation and the transmission loss at the wavelength 1310 nm are correlated with each other, and the transmission loss at the wavelength 1310 nm increases as the dispersion in the outer diameter variation decreases. However, when the dispersion in the outer diameter variation becomes large, the connection loss may become large, or the outer diameter may deviate from the standard. Thus, by slightly dispersing the outer diameter variation (setting 3σ to 0.1 µm to 0.5 µm), the transmission loss at the wavelength 1310 nm can be reduced within an acceptable range without causing any issues related to the outer diameter variation.

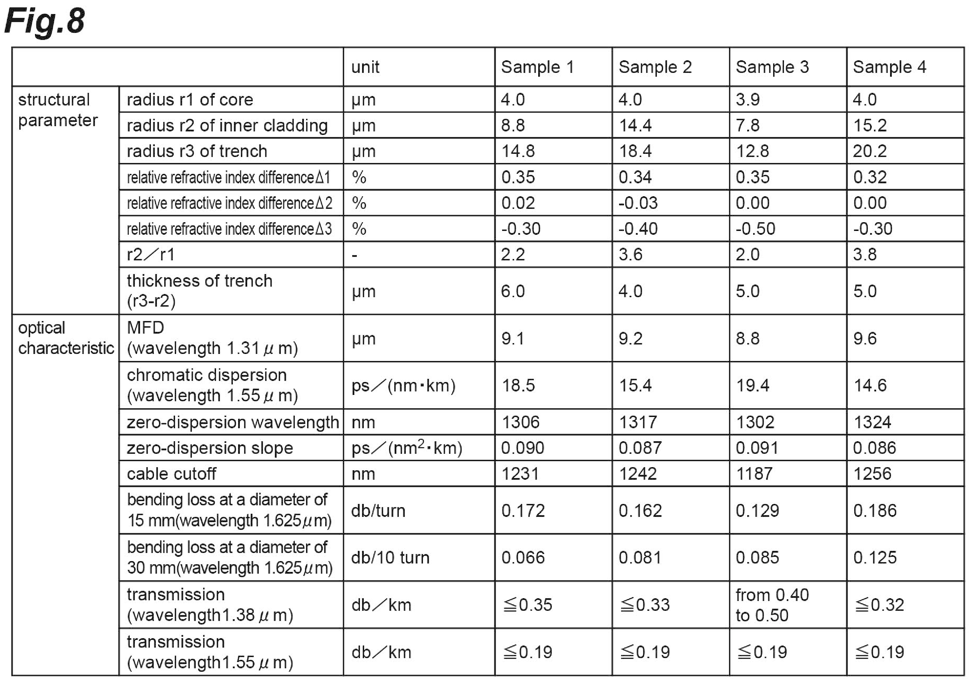

Here, the specifications and characteristics of optical fibers according to sample numbers 1 to 4 are shown in FIG. 8 as an example and a comparative example. The radius of the outer cladding 123 is 62.5 µm in all cases.

As shown in FIG. 8, Samples 1 and 2 achieve good values for each optical characteristic. In contrast, in Sample 3, the transmission loss at the wavelength 1380 nm is excessively large, and the chromatic dispersion (λ = 1550 nm) is out of the G.657.A2 standard. In Sample 4, the bending loss of the diameter 30 mm at the wavelength 1625 nm is excessive. From this, the value (r2/r1) obtained by dividing the radius r2 of the inner cladding 121 by the radius r1 of the core 11 is preferably 2.2 to 3.6. The residual stress in the core of sample numbers 1 to 4 is the compressive stress.

### REFERENCE SIGNS LIST

10A optical fiber
11 core
12 cladding
121 inner cladding
122 trench
123 outer cladding
13 glass fiber
14 primary resin layer
15 secondary resin layer
16A coating resin layer
D1 diameter
D2 outer diameter
r1 radius
r2 radius
r3 radius
E1 range
E2 range
E3 range
E4 range
Δ1 relative refractive index difference
Δ2 relative refractive index difference
Δ3 relative refractive index difference
Δ4 relative refractive index difference

## Claims

1. An optical fiber comprising:
a glass fiber including a core and a cladding,
wherein the cladding includes an inner cladding surrounding an outer periphery of the core, a trench surrounding an outer periphery of the inner cladding, and an outer cladding surrounding an outer periphery of the trench,
wherein the inner cladding has a refractive index lower than a refractive index of the core,
wherein the trench has a refractive index lower than the refractive index of the inner cladding,
wherein the outer cladding has a refractive index higher than the refractive index of the trench and lower than the refractive index of the core,
wherein the core is doped with germanium,
wherein r2/r1 is 2.2 to 3.6, r3 - r2 is 3 µm to 10 µm, Δ1 - Δ2 is 0.15% to 0.40%, and Δ3 is -0.70% to -0.10%, where Δ1 is a relative refractive index difference of the core with respect to a refractive index of pure silica, Δ2 is a relative refractive index difference of the inner cladding with respect to the refractive index of pure silica, Δ3 is a relative refractive index difference of the trench with respect to the refractive index of pure silica, r1 is a radius of the outer periphery of the core, r2 is a radius of the outer periphery of the inner cladding, and r3 is a radius of the outer periphery of the trench,
wherein a bending loss for light having a wavelength of 1625 nm is 1.0 dB or less per turn when the optical fiber is wound around a mandrel having a diameter of 15 mm, and a bending loss for light having a wavelength of 1625 nm is 0.1 dB or less per 10 turns when the optical fiber is wound around a mandrel having a diameter of 30 mm,
wherein the optical fiber has a cable cutoff wavelength of 1260 nm or less,
wherein the core has a residual stress that is a compressive stress, and
wherein the glass fiber has a transmission loss of 0.19 dB/km or less for light having a wavelength of 1550 nm.

2. The optical fiber according to claim 1,
wherein a bending loss for light having a wavelength of 1625 nm is 1.0 × 10⁻⁴ dB or less per turn when the optical fiber is wound around a mandrel having a diameter of 100 mm.

3. The optical fiber according to claim 1 or 2,
wherein |dQ(r)/dr| in a section of 10% to 90% of a thickness of the outer cladding is 2.0 [MPa/µm] or less, where Q(r) [MPa] is a residual stress in the outer cladding at a position of r [µm] from a center of the optical fiber.

4. The optical fiber according to any one of claims 1 to 3,
wherein the core is further doped with fluorine.

5. The optical fiber according to claim 4,
wherein a fluorine concentration contained in the core is 200 ppm or more.

6. The optical fiber according to any one of claims 1 to 5,
wherein an average value of the residual compressive stresses in the core in a radial direction of the core is 100 MPa or less.

7. The optical fiber according to any one of claims 1 to 6,
wherein the glass fiber has a transmission loss of 0.32 dB/km or less for light having a wavelength of 1310 nm, and
wherein the glass fiber has a transmission loss of 0.18 dB/km or less for light having a wavelength of 1550 nm.
